# EUROPÄISCHE PATENTSCHRIFT

(11) **EP 4 323 211 B1**
(45) Veröffentlichungstag und Bekanntmachung des Hinweises auf die Patenterteilung: **25.11.2026**
(21) Anmeldenummer: 22721326.1
(22) Anmeldetag: 07.04.2022
(51) Int. Cl.: B60D 1/62, B60D 1/02, G01L 1/00

(54) **KUPPLUNGSVORRICHTUNG FÜR EIN IN ZUGRICHTUNG HINTERES FAHRZEUG EINES FAHRZEUGVERBUNDES**
COUPLING DEVICE FOR A VEHICLE THAT IS PART OF A VEHICLE COMBINATION AND IS LOCATED AT THE REAR IN THE TOWING DIRECTION
DISPOSITIF DE COUPLAGE POUR UN VÉHICULE FAISANT PARTIE D'UNE COMBINAISON DE VÉHICULES ET SITUÉ À L'ARRIÈRE DANS LA DIRECTION DE REMORQUAGE

(30) Priorität: 12.04.2021 DE 102021109066
(43) Veröffentlichungstag der Anmeldung: 21.02.2024
(73) Patentinhaber: Rühlicke GmbH, 30179 Hannover (DE)
(72) Erfinder: RÜHLICKE, Stefan, 30175 Hannover (DE)
(74) Vertreter: Holz, Christian
(86) Internationale Anmeldenummer: PCT/EP2022/059218
(87) Internationale Veröffentlichungsnummer: WO 2022/218800

(56) Entgegenhaltungen:
- EP-A1- 2 886 887
- DE-B- 1 046 506
- DE-B- 1 145 935
- DE-U1- 202015 104 826
- KR-B1- 101 411 635
- US-B2- 6 959 942

## Beschreibung

Die vorliegende Erfindung betrifft eine Kupplungsvorrichtung für ein in Zugrichtung hinteres Fahrzeug eines Fahrzeugverbundes gemäß dem Oberbegriff des Patentanspruchs 1, eine Kupplungsösenbuchse zur Verwendung in einer Kupplungsöse einer derartigen Kupplungsvorrichtung gemäß des Patentanspruchs 13, ein hinteres Fahrzeug mit einer derartigen Kupplungsvorrichtung gemäß des Patentanspruchs 14 sowie einen Fahrzeugverbund mit einem derartigen hinteren Fahrzeug gemäß des Patentanspruchs 15.

Um es einem Zugfahrzeug zu ermöglichen, einen Anhänger zu ziehen, ist es erforderlich, das Zugfahrzeug und den Anhänger miteinander kraftübertragend und lösbar zu verbinden. Derartige Zugfahrzeuge können zum Beispiel ein Personenkraftwagen (Pkw), ein Lastkraftwagen (Lkw), ein Omnibus, eine Baumaschine, ein forst- oder landwirtschaftliches Fahrzeug, ein Militärfahrzeug oder ein sonstiges Landfahrzeug, insbesondere ein sonstiges Straßenfahrzeug oder Geländefahrzeug, sein. Derartige Zugfahrzeuge können mittels eines eigenen Antriebs bewegt werden bzw. fahren, d.h. können Fahrzeuge mit einem eigenen Antrieb sein. Ein Zugfahrzeug kann wenigstens einen Anhänger als Fahrzeug ohne eigenen Antrieb mit sich mit bewegen bzw. hinter sich her ziehen. Ein Anhänger dient üblicherweise dem Transport von Lasten und kann beispielsweise ein Pkw-Anhänger, ein Lkw-Anhänger, ein Wohnwagen, ein Pferdeanhänger, ein Bootstrailer und dergleichen sein. Anhänger weisen wenigstens eine Achse mit Rädern und häufig wenigstens zwei Achsen mit Rädern auf. Auch Anhänger können für den privaten, sportlichen sowie gewerblichen Gebrauch zum Beispiel im Speditionswesen, im Baugewerbe, in der Landwirtschaft und dergleichen ausgebildet sein. Zugfahrzeug und Anhänger können auch gemeinsam als Fahrzeugverbund bezeichnet werden. Das Zugfahrzeug kann auch als in Zug-, Fahrt- oder Bewegungsrichtung vorderes Fahrzeug und der Anhänger auch als in Zug-, Fahrt- oder Bewegungsrichtung hinteres Fahrzeug des Fahrzeugverbundes bezeichnet werden.

Die Umsetzung einer lösbaren Verbindung zwischen Zugfahrzeug und Anhänger erfolgt üblicherweise mit einer sogenannten Anhängekupplung zum Anhängen des Anhängers am Zugfahrzeug, welche als System wenigstens zweiteilig ausgebildet ist und jeweils am Zugfahrzeug und am Anhänger eine Kupplungsvorrichtung aufweist, welche dort jeweils gehalten werden und miteinander lösbar verbunden werden können. Mehrere Anhänger können ebenso auf diese Art und Weise lösbar miteinander verbunden werden.

Bekannt sind dabei verschiedene Arten von Anhängekupplungen wie zum Beispiel Bolzenkupplungen und Maulkupplungen bzw. Bolzenkupplungssysteme und Maulkupplungssysteme, bei denen sich ein Schaft bzw. eine Deichsel vom Anhänger zum Zugfahrzeug hin erstreckt und dort am Ende eine Öse als Durchgangsöffnung in der vertikalen Richtung aufweist, welche auch als Zugöse oder als Kupplungsöse bezeichnet werden kann. Die Zugöse bzw. die Kupplungsöse kann eine Buchse als Kupplungsösenbuchse aufweisen, welche separat hergestellt und in eine entsprechende Aussparung der Kupplungsöse eingepresst sein kann, um als Verschleißteil ersetzt werden zu können, ohne die Kupplungsvorrichtung als Ganzes austauschen zu müssen. Am gegenüberliegenden Ende ist der Schaft zum Beispiel als Flansch ausgebildet und feststehend am Gestell des Anhängers mittels Schrauben befestigt.

Seitens des Zugfahrzeugs ist bei einer Bolzenkupplung eine Halterung feststehend am Gestell des Zugfahrzeugs befestigt, welche in der vertikalen Richtung zwei Flächen mit jeweils einer Durchgangsöffnung in der vertikalen Richtung aufweist. Die beiden Durchgangsöffnungen sind miteinander fluchtend angeordnet. Die Zugöse des Anhängers kann zwischen den beiden Flächen der Halterung des Zugfahrzeugs aufgenommen werden. Alle drei Durchgangsöffnungen können in der vertikalen Richtung durch einen Bolzen, auch Kupplungsbolzen genannt, miteinander verbunden werden, welcher mittels Verdickung oben auf der oberen Fläche aufliegen und am unteren Ende gesichert werden kann. Vergleichbar kann dies bei einer Maulkupplung bzw. bei einem Maulkupplungssystem erfolgen.

Aus dem AT 412 268 B ist eine Zugöse einer Kupplung mit einem, insbesondere einen Ring, eine Kugelpfanne od. dgl. umfassenden Kuppelelement, einem Abstandselement und einem eine im wesentlichen rechteckige, insbesondere im wesentlichen quadratische, Grundfläche aufweisenden Flansch mit Eckenbereichen bekannt.

Bei derartigen Anhängekupplungen muss zum Beispiel zwischen dem Innendurchmesser der Zugöse bzw. der Kupplungsösenbuchse der Anhängerdeichsel und dem Außendurchmesser des Kupplungsbolzens des Zugfahrzeugs ein gewisser Abstand von wenigen Millimetern vorhanden sein, um die jeweilige formschlüssige Verbindung überhaupt vornehmen zu können. Dies führt dazu, dass insbesondere in der Längsrichtung als wesentliche Fahrt-, Bewegungs- oder Zugrichtung ein Spiel vorhanden ist, welches zwar für das Verbinden bzw. für das Ankuppeln erforderlich ist, jedoch im Fahrtbetrieb eine gewisse Relativbewegung im Wesentlichen in der Fahrt-, Bewegungs- oder Zugrichtung zwischen dem Zugfahrzeug und dem Anhänger bzw. zwischen dem Kupplungsbolzen und der Zugöse bzw. der Kupplungsösenbuchse ermöglicht.

Nachteilig ist an diesem Spiel zwischen dem Kupplungsbolzen und der Zugöse bzw. der Kupplungsösenbuchse im Fahrtbetrieb, dass die Zugöse bzw. die Kupplungsösenbuchse und der Kupplungsbolzen aneinander reiben und bzw. oder gegeneinander stoßen können und hieraus aufgrund der vorliegenden Kräfte ein Abrieb bzw. ein Verschleiß an diesen Komponenten resultieren kann. Dieser mechanische Verschleiß kann auf die Dauer nicht nur die Materialstärke sowohl des Kupplungsbolzens als auch der Zugöse bzw. der Kupplungsösenbuchse reduzieren und hierdurch den Kupplungsbolzen bzw. die Zugöse bzw. die Kupplungsösenbuchse als Übertragungselement im Kraftfluss zwischen Anhänger und Zugfahrzeug schwächen, sondern auch zunehmend das Spiel vergrößern, was dann zu größeren Relativbewegungen und hieraus resultierenden stärkeren Kräften mit einem zunehmenden mechanischen Verschleiß führen kann.

Daher ist es für die Verkehrssicherheit eines Anhängers erforderlich, regelmäßig, wie zum Beispiel in bestimmten Zeitabständen wie zum Beispiel halbjährig oder in Abhängigkeit der Benutzung des Anhängers zum Beispiel in Abhängigkeit der gefahrenen Kilometer, die Zugöse bzw. die Kupplungsösenbuchse des Anhängers auf Verschleiß zu kontrollieren. Dies erfolgt bisher manuell, d. h. durch eine Person, welche mittels einer mechanischen Prüflehre bzw. Schablone die Maße der Zugöse bzw. der Kupplungsösenbuchse an bestimmten vorgegebenen Stellen misst um festzustellen, ob die gemessenen Maße die entsprechenden Vorgaben noch erfüllen oder nicht, d. h. die Zugöse bzw. die Kupplungsösenbuchse bereits übermäßig stark verschlissen ist und ausgetauscht werden muss oder noch nicht.

Nachteilig hieran ist, dass die Beurteilung eines zulässigen oder unzulässigen Verschleißes der Zugöse bzw. der Kupplungsösenbuchse der jeweiligen Person überlassen wird und somit eine gewisse Unsicherheit dahingehend besteht, dass die Beurteilung auch von der Aufmerksamkeit und bzw. oder von der Erfahrung der Person abhängen kann. Dies kann dazu führen, dass eine unzulässig stark verschlissene Zugöse bzw. Kupplungsösenbuchse weiterhin verwendet wird, was die Verkehrssicherheit des Anhängers gefährden kann. Dies kann ebenso dazu führen, dass eine noch verwendbare Zugöse bzw. Kupplungsösenbuchse vorzeitig ausgetauscht wird, was zusätzlichen Aufwand, zusätzliche Kosten und bzw. oder einen unnötigen Ausfall des Anhängers verursachen kann.

Nachteilig ist hieran auch, dass der Verschleiß der Zugöse bzw. der Kupplungsösenbuchse des Anhängers sehr unterschiedlich auftreten kann und somit innerhalb des zulässigen Zeit- bzw. Kilometerintervalls zwischen zwei Verschleißprüfungen bereits ein unzulässig hoher Verschleiß erreicht werden kann, ohne dass dies in diesem Moment festgestellt werden kann. Dies kann ebenfalls die Verkehrssicherheit des Anhängers gefährden.

Die EP 3 421 272 A1 beschreibt eine Anhängerkupplung zum Verbinden eines Anhängers mit einem Zugfahrzeug. Die Anhängerkupplung umfasst ein verschleißbares Stützelement, das so angeordnet ist, dass es an einem Verbindungsabschnitt einer an dem Anhänger montierten Deichsel anliegt, wenn der Verbindungsabschnitt, d.h. die Zugöse, von der Kupplungsaufnahme der Anhängerkupplung aufgenommen und in einer Zugposition positioniert ist. Die Anhängerkupplung umfasst auch ein bewegliches Kupplungselement, d.h. einen Kupplungsbolzen, mit einer ersten Position, so dass sich der Verbindungsabschnitt, d.h. die Zugöse, in die und aus der Zugposition bewegen kann, und einer zweiten Position zum Sichern des Verbindungsabschnitts, d.h. Zugöse, in der Zugposition, wobei die zweite Position derart ist, dass der Verbindungsabschnitt, wenn er in die und aus der Zugposition eintritt, das Kupplungselement, d.h. den Kupplungsbolzen, drückt, um eine Bewegung auszuführen. Die Anhängerkupplung umfasst ferner einen Größensensor, der so konfiguriert ist, dass er ein Maß bereitstellt, das eine Größe der Bewegung anzeigt, und dadurch in der Lage ist, zu erkennen, dass ein Verschleißbetrag des Stützelements einen vorbestimmten Schwellenwert überschreitet. Es wird somit das verschleißbare Stützelement der Kupplungsaufnahme der Anhängerkupplung des Zugfahrzeugs auf Verschleiß überwacht, jedoch weder der Kupplungsbolzen noch die Zugöse.

Das KR 10 1411635 B1 beschreibt eine Abschlepphakenvorrichtung für ein Fahrzeug mit einem Abnutzungsindikator umfassend eine Befestigungseinheit, die in die vordere Karosserie eines Fahrzeugs eingebaut und an der Karosserie befestigt ist, eine ringförmige Kopfeinheit, die mit der Befestigungseinheit verbunden ist, eine erste Anzeigeeinheit, die an der Kopfeinheit ausgebildet ist, und eine zweite Anzeigeeinheit, die der ersten Anzeigeeinheit benachbart ist und ein Lineal aufweist. DE 10 46 506 B offenbart ebenfalls eine bekannte Kupplungsvorrichtung.

Eine Aufgabe der vorliegenden Erfindung ist es, eine Kupplungsvorrichtung für ein in Zugrichtung hinteres Fahrzeug eines Fahrzeugverbundes der eingangs beschriebenen Art bereit zu stellen, sodass die Überprüfung des Verschleißes der Kupplungsvorrichtung vereinfacht und bzw. oder verbessert werden kann. Insbesondere soll der Verschleiß der Kupplungsvorrichtung regelmäßiger als bisher und insbesondere sogar fortlaufend überwacht werden können. Dies soll insbesondere für eine Kupplungsösenbuchse einer Kupplungsöse der Kupplungsvorrichtung eines in Zugrichtung hinteren Fahrzeugs ermöglicht werden. Dies soll insbesondere möglichst einfach, verlässlich, bauraumsparend, personenunabhängig und bzw. oder selbststätig erfolgen können. In jedem Fall soll hierdurch insbesondere die Verkehrssicherheit des Anhängers verbessert bzw. erhöht werden. Zumindest soll eine Alternative zu bekannten Möglichkeiten zur Überprüfung des Verschleißes der Kupplungsvorrichtung eines in Zugrichtung hinteren Fahrzeugs geschaffen werden.

Die Aufgabe wird erfindungsgemäß durch eine Kupplungsvorrichtung mit den Merkmalen des Patentanspruchs 1, durch eine Kupplungsösenbuchse mit den Merkmalen des Patentanspruchs 13, durch ein hinteres Fahrzeug mit den Merkmalen des Patentanspruchs 14 sowie durch einen Fahrzeugverbund mit den Merkmalen des Patentanspruchs 15 gelöst. Vorteilhafte Weiterbildungen sind in den Unteransprüchen beschrieben.

Somit betrifft die vorliegende Erfindung eine Kupplungsvorrichtung für ein in Zugrichtung hinteres Fahrzeug eines Fahrzeugverbundes, mit einer Kupplungsöse mit einer Kupplungsösenbuchse, dessen Kupplungsauge sich entlang einer Längsachse erstreckt. Die Kupplungsösenbuchse der Kupplungsöse bzw. die Zugöse bzw. die Kupplungsöse selbst stellt dabei, wie eingangs beschrieben, eine ringförmige, rotationssymmetrische und üblicherweise metallische Durchgangsöffnung dar, in welche der korrespondierende Kupplungsbolzen eines in Zugrichtung vorderen Fahrzeugs des Fahrzeugverbundes in der vertikalen Richtung senkrecht von oben eingreifen kann. Die Längsachse der Kupplungsösenbuchse bzw. der Kupplungsöse als dessen Achse der Rotationssymmetrie fällt dabei bei der Verwendung an einem Anhänger mit der Achse der vertikalen Richtung in kartesischen Koordinaten, d.h. mit der Richtung der Schwerkraft, zusammen, welche sich senkrecht zur horizontalen Ebene erstreckt.

Die erfindungsgemäße Kupplungsvorrichtung ist gekennzeichnet durch wenigstens ein Verschleißdetektionsmittel, welches senkrecht zur Längsachse ausgerichtet derart wenigstens in der Kupplungsösenbuchse angeordnet ist, sodass ein Verschleiß der Kupplungsösenbuchse senkrecht zur Längsachse optisch und bzw. oder sensorisch erkannt werden kann. Mit anderen Worten ist innerhalb der Kontur bzw. innerhalb des Materials der Kupplungsösenbuchse ein Verschleißdetektionsmittel derart angeordnet, sodass sowohl das Material der Kupplungsösenbuchse als auch das Material des Verschleißdetektionsmittels durch den Abrieb bzw. durch den Verschleiß, welcher im Betrieb wie eingangs beschrieben seitens der Kupplungsösenbuchse auftritt, in ihrer radialen Erstreckung reduziert werden.

Hierzu kann das wenigstens eine Verschleißdetektionsmittel genau radial bzw. senkrecht zur Längsachse oder zumindest derart schräg zur Längsachse in der Kupplungsösenbuchse angeordnet sein, sodass der Abrieb bzw. der Verschleiß auch das Verschleißdetektionsmittel von außen reduzieren kann.

Der vorliegenden Erfindung liegt dabei die Erkenntnis zugrunde, dass durch die Ausbildung eines Teils der Kupplungsösenbuchse als bzw. mit einem Verschleißdetektionsmittel das Maß des Abriebs bzw. des Verschleißes der Kupplungsösenbuchse an dieser Stelle von außen optisch erkennbar und bzw. oder sensorisch erfassbar gemacht werden kann. In jedem Fall kann der Zustand des Verschleißdetektionsmittels auf diese Art und Weise einfacher erkannt bzw. überwacht werden als dies bisher durch regelmäßige manuelle Kontrollen der Kupplungsösenbuchse selbst wie eingangs beschrieben möglich ist. Dies kann den Aufwand und damit auch die Kosten der Kontrolle des Maßes des Verschleißes der Kupplungsösenbuchse reduzieren. Dies kann auch die Verlässlichkeit des Ergebnisses der Kontrolle erhöhen, was zum einen die Verkehrssicherheit des Anhängers des Fahrzeugverbundes erhöhen und zum anderen einen vorzeitigen bzw. unnötigen Austausch einer noch verwendbaren Kupplungsösenbuchse vermeiden kann. Dabei das Verschleißdetektionsmittel innerhalb der Kupplungsösenbuchse anzuordnen kann den Aufwand der Umsetzung und insbesondere den hierfür erforderlichen Bauraum geringhalten. Insbesondere kann eine durchgängige bzw. deutlich regelmäßigere Kontrolle bzw. Überwachung des Maßes des Verschleißes der Kupplungsösenbuchse als bisher bekannt erfolgen, was die Verkehrssicherheit des Anhängers des Fahrzeugverbundes sowie die Dauer der Verwendung einer Kupplungsösenbuchse erhöhen kann.

Vorzugswiese ist das Verschleißdetektionsmittel in wenigstens einem Horizontalhohlraum der Kupplungsösenbuchse angeordnet, wobei das Verschleißdetektionsmittel wenigstens ein erstes Verschleißelement einer ersten Farbe aufweist, welches zwischen dem äußeren Rand des Horizontalhohlraums und einer Verschleißgrenze angeordnet ist. Die erste Farbe des Verschleißelements unterscheidet sich signifikant von der Farbe des Materials der Kupplungsösenbuchse selbst. Mit anderen Worten kann als Verschleißdetektionsmittel wenigstens ein farbiges Verschleißelement, insbesondere aus einem farbigen Kunststoff, verwendet werden, welches in einen entsprechenden Hohlraum der Kupplungsösenbuchse eingebracht sein kann und nach außen hin mit der Kontur bzw. Oberfläche der Kupplungsösenbuchse abschließt und von einer Person optisch erkannt werden kann. Ist das farbige Verschleißelement noch nicht vollständig abgerieben, so kann das farbige Verschleißelement von der Person optisch erkannt und hieraus auf einen zulässigen Verschleiß der Kupplungsösenbuchse geschlossen werden. Ist das farbige Verschleißelement für die Person nicht mehr optisch erkennbar, so kann die Person hieraus schließen, dass das farbige Verschleißelement vollständig abgerieben und somit die Grenze des zulässigen Verschleißes erreicht oder überschritten ist. Dies kann eine besonders einfache Umsetzung der vorliegenden Erfindung darstellen, welche einer Person eine regelmäßige optische Kontrolle des Verschleißes erlauben kann. Insbesondere kann der Kraftfahrer der Zugfahrzeugs, welcher einen Anhänger ankoppeln soll, einfach und schnell selbst den Verschleißzustand der Kupplungsösenbuchse des Anhängers optisch kontrollieren. Dies kann das Vertrauen des Kraftfahrers in die Verwendung eines fremden bzw. unbekannten Anhängers erhöhen.

Das Verschleißdetektionsmittel kann auch wenigstens zwei unterschiedlich farbige Verschleißelemente aufweisen, welcher radial hintereinander abgeordnet ist, um die Aussagefähigkeit zu erhöhen, wie weiter unten näher beschrieben werden wird.

Alternativ oder zusätzlich kann das Verschleißdetektionsmittel eine elektronische Überwachung des Verschleißzustand bzw. der Verschleißgrenze der Kupplungsösenbuchse ermöglichen, wie weiter unter näher beschrieben werden wird.

In jedem Fall kann das Verschleißdetektionsmittel in der horizontalen Ebene bzw. im Querschnitt der Kupplungsösenbuchse betrachtet an einer Stelle angeordnet sein, an welcher üblicherweise ein besonders signifikanter Abrieb bzw. Verschleiß auftritt bzw. an welcher üblicherweise zuerst das Erreichen eines unzulässig hohen Verschleißes zu erwarten ist. Dies kann die Aussagefähigkeit des Verschleißdetektionsmittels entsprechend erhöhen. Hierzu kann das Verschleißdetektionsmittel insbesondere entlang der Längsachse mittig angeordnet werden.

Es können auch, in der horizontalen Ebene bzw. im Querschnitt der Kupplungsösenbuchse betrachtet, mehrere gleiche oder unterschiedliche Verschleißdetektionsmittel verwendet werden, um die zuvor beschriebene Kontrolle des Verschleißes an entsprechend vielen Stellen der Kupplungsösenbuchse umsetzen zu können. Hierdurch können insbesondere mehrere Stellen, welche üblicherweise einem signifikanten Verschleiß unterliegen, gleichzeitig wie zuvor beschrieben auf Verschleiß überwacht werden. In diesem Fall kann beispielsweise wenigstens ein sensorisches Verschleißdetektionsmittel an einer Stelle der Kupplungsösenbuchse angewendet werden, welche für die Person bzw. für den Kraftfahrer optisch schlecht bis gar nicht zu erfassen ist. Wenigstens ein optisches Verschleißdetektionsmittel kann an einer Stelle der Kupplungsösenbuchse angewendet werden, welche für die Person bzw. für den Kraftfahrer gut bzw. einfach optisch zu erfassen ist.

Mehrere gleiche oder unterschiedliche Verschleißdetektionsmittel können auch in der vertikalen Richtung, d.h. entlang der Längsachse, versetzt zueinander angeordnet werden, um unterschiedliche Abschnitte der Kupplungsösenbuchse und bzw. oder mehrere Stellen eines Abschnitts der Kupplungsösenbuchse wie zuvor beschrieben zu überwachen, wie im Folgenden noch näher beschrieben werden wird. Auch hierdurch kann die Aussagefähigkeit der Verschleißdetektionsmittel entsprechend erhöht werden.

In jedem Fall kann vorteilhafterweise das Verschleißdetektionsmittel vollständig in der Kupplungsösenbuchse aufgenommen werden, so dass die übrige Kupplungsvorrichtung unverändert bleiben und durch die Verwendung einer erfindungsmäßen Kupplungsösenbuchse zu einer erfindungsgemäßen Kupplungsvorrichtung weiterentwickelt werden kann. Auch kann eine verschlissene Kupplungsösenbuchse samt verschlissenem Verschleißdetektionsmittel ausgetauscht werden.

Gemäß einem Aspekt der Erfindung ist das Verschleißdetektionsmittel in wenigstens einem Horizontalhohlraum der Kupplungsösenbuchse angeordnet, wobei das Verschleißdetektionsmittel wenigstens ein erstes Verschleißelement einer ersten Farbe, welches zwischen dem inneren Rand des Horizontalhohlraums der Kupplungsösenbuchse und einer Verschleißgrenze angeordnet ist, und wenigstens ein zweites Verschleißelement einer zweiten, unterschiedlichen Farbe aufweist, welches innerhalb der Verschleißgrenze angeordnet ist. Auf diese Art und Weise kann die erste Farbe des ersten Verschleißelements von der Person bzw. von dem Kraftfahrer erkannt und auf einen zulässigen Verschleiß der Kupplungsösenbuchse geschlossen werden. Wird von der Person bzw. vom Kraftfahrer die zweite Farbe des zweiten Verschleißelements optisch erkannt, so kann hierdurch auf einen unzulässigen Verschleiß der Kupplungsösenbuchse geschlossen werden.

Somit kann, als Weiterentwicklung des zuvor beschriebenen lediglich einen farbigen Verschleißelements, aus der optisch erkannten zweiten Farbe des zweiten Verschleißelements darauf geschlossen werden, dass das zweite Verschleißelement weiterhin vorhanden ist. Würde lediglich ein erstes farbiges Verschleißelement verwendet werden, so könnte dessen Abwesenheit sowohl durch das Erreichen der zulässigen Verschleißgrenze als auch dadurch begründet sein, dass sich das einfarbige Verschleißelement gelöst hat und aus der Kupplungsösenbuchse herausgefallen ist. In diesem Fall würde eine noch verwendbare Kupplungsösenbuchse als verschlissen bewertet und unnötigerweise ausgetauscht werden. Dies kann durch diesen Aspekt der Erfindung vermieden werden.

Gemäß einem weiteren Aspekt der Erfindung weist das Verschleißdetektionsmittel wenigstens ein Leuchtmittel auf, welches innerhalb des Horizontalhohlraums der Kupplungsösenbuchse und bzw. oder innerhalb eines Hohlraums der Kupplungsöse, vorzugsweise innerhalb eines Ringhohlraums der Kupplungsöse, angeordnet und ausgebildet ist, das erste Verschleißelement durch das zweite Verschleißelement hierdurch zu durchleuchten. Das Leuchtmittel kann insbesondere als LED umgesetzt werden. Der Betrieb des Leuchtmittels kann insbesondere dauerhaft bzw. durchgängig erfolgen, um jederzeit den Verschleißzustand der Kupplungsösenbuchse kontrollieren zu können. Ferner kann ein entsprechender Aufwand, das Leuchtmittel einzuschalten und auszuschalten bzw. hierfür entsprechende elektrische Möglichkeiten wie zum Beispiel einen von außen zugänglichen Schalter an der Kupplungsösenbuchse vorsehen zu müssen, vermieden werden.

Die Materialien des ersten und des zweiten Verschleißelements, beispielsweise aus Kunststoff, können entsprechend farbig sowie lichtdurchlässig ausgebildet sein, sodass die Materialien des ersten und des zweiten Verschleißelements radial von innen bzw. "von hinten" durchleuchtet werden können und das Licht in der Farbe des zuletzt durchleuchteten Verschleißelements nach außen austritt. Hierdurch kann der zuvor beschriebene Aspekt des zweifarbigen Verschleißdetektionsmittels in seiner Erkennbarkeit bzw. in seiner Aussagefähigkeit für die Person bzw. für den Kraftfahrer weiter verbessert werden, da die Farbe aufgrund des Leuchtens optisch besser wahrgenommen werden kann. Dies kann es der Person bzw. dem Kraftfahrer insbesondere bei Dunkelheit, bei schlechten Sichtverhältnissen und bzw. oder bei verschmutzter Oberfläche der Kupplungsösenbuchse erleichtern bzw. ermöglichen, das Verschleißdetektionsmittel an sich und insbesondere dessen Farbe optisch zu erkennen.

Hierbei die Kupplungsöse mit einem Hohlraum und insbesondere mit einem Ringhohlraum zu versehen kann ausreichend Bauraum innerhalb der Kupplungsöse bzw. der Kupplungsvorrichtung schaffen, um das wenigstens eine Leuchtmittel und insbesondere mehrere Leuchtmittel dort anzuordnen. Insbesondere kann durch einen, entsprechend kleinen, Hohlraum eine Schwächung der Kupplungsöse ausreichend vermieden werden, sodass die Kupplungsöse seine kraftübertragende Funktion ohne Einschränkung ausüben kann.

Dabei das Leuchtmittel in der Kupplungsöse, d.h. außerhalb der austauschbaren Kupplungsösenbuchse, anzuordnen kann es ermöglichen, die Leuchtmittel durchgängig zu verwenden, d.h. eine verschlissene Kupplungsösenbuchse samt verschlissenem Verschleißdetektionsmittel auszutauschen, ohne dass auch das Leuchtmittel ausgetauscht werden muss. Dies kann Kosten, Aufwand und bzw. oder Material sparen.

Gemäß einem weiteren Aspekt der Erfindung weist das Verschleißdetektionsmittel, vorzugsweise innerhalb eines Hohlraums der Kupplungsöse, vorzugsweise innerhalb eines Ringhohlraums der Kupplungsöse, und bzw. oder innerhalb eines Horizontalhohlraums der Kupplungsöse und bzw. oder eines Schaftes, wenigstens einen elektrischen Energiespeicher auf, welcher ausgebildet ist, wenigstens das Leuchtmittel, vorzugsweise ferner eine Detektionseinheit und bzw. oder eine drahtlose Kommunikationseinheit, elektrisch zu versorgen. Hierdurch kann eine elektrische Energieversorgung des Leuchtmittels und gegebenenfalls mehrerer bzw. aller Leuchtmittel direkt seitens der Kupplungsösenbuchse, seitens der Kupplungsösen bzw. seitens der Kupplungsvorrichtung selbst erfolgen, sodass auf eine elektrisch leitfähige Verbindung zur elektrischen Energieversorgung von außerhalb der Kupplungsösenbuchse, der Kupplungsösen bzw. der Kupplungsvorrichtung verzichtet werden kann. Dies kann den Aufwand der Verwendung wenigstens eines Leuchtmittels wie zuvor beschrieben entsprechend geringhalten. Insbesondere bei der Verwendung von LEDs als Leuchtmittel, welche üblicherweise einen sehr geringen elektrischen Energiebedarf aufweisen, kann ein dauerhafter bzw. durchgängiger Betrieb des Leuchtmittels durch den elektrischen Energiespeicher auch über Jahre gewährleistet sein, sodass auf ein Wiederaufladen oder auf ein Austauschen des elektrischen Energiespeichers verzichtet werden kann. Ggfs. können weitere elektrische bzw. elektronische Komponenten des Verschleißdetektionsmittels ebenfalls von dem elektrischen Energiespeicher elektrisch versorgt werden, so dass auf die Verwendung weiterer bzw. separater elektrischer Energiespeicher verzichtet werden kann.

Gemäß einem weiteren Aspekt der Erfindung ist das Verschleißdetektionsmittel in wenigstens einem Horizontalhohlraum der Kupplungsösenbuchse angeordnet, wobei das Verschleißdetektionsmittel wenigstens ein erstes Verschleißelement, welches zwischen dem inneren Rand des Horizontalhohlraums der Kupplungsösenbuchse und einer Verschleißgrenze angeordnet ist, und wenigstens ein zweites Verschleißelement aufweist, welches innerhalb der Verschleißgrenze angeordnet ist, wobei an der Verschleißgrenze wenigstens ein elektrisch leitfähiges Element eines elektrischen Kreises derart angeordnet ist, sodass das elektrisch leitfähige Element durch den Verschleiß der Kupplungsösenbuchse durchtrennt wird, wenn der Verschleiß die Verschleißgrenze erreicht, wobei das Verschleißdetektionsmittel, vorzugsweise innerhalb eines Hohlraums der Kupplungsöse, vorzugsweise innerhalb eines Ringhohlraums der Kupplungsöse, und bzw. oder innerhalb eines Horizontalhohlraums der Kupplungsöse und bzw. oder eines Schaftes, eine Detektionseinheit aufweist, welche ausgebildet ist, die elektrische Leitfähigkeit des elektrisch leitfähigen Elements zu überwachen und, vorzugsweise beim Durchtrennen des elektrisch leitfähigen Elements, eine entsprechende Information auszugeben. Die beiden Verschleißelemente können die zuvor beschriebenen beiden einfarbigen ersten und zweiten Verschleißelemente oder auch zwei Verschleißelemente beliebiger gleicher Farbe sein.

Diesem Aspekt der Erfindung liegt die Erkenntnis zugrunde, dass zusätzlich oder alternativ zu den zuvor beschriebenen optischen Möglichkeiten der Verschleißüberwachung durch die Person bzw. durch den Kraftfahrer auch eine sensorische Möglichkeit der Überwachung geschaffen werden kann. Hierzu kann ein elektrisch leitfähiges Element wie zum Beispiel ein elektrischer Leiter bzw. eine elektrische Leiterschleife derart genau bis an die Verschleißgrenze eines zulässigen Verschleißes der Kupplungsösenbuchse an dieser Stelle geführt werden, was insbesondere innerhalb des zweiten Verschleißelements als beispielsweise Kunststoffteil erfolgen kann, welches gleichzeitig durch das erste Verschleißelement als beispielsweise Kunststoffteil nach außen hin abgedeckt bzw. geschützt sein kann.

In diesem Fall wird das erste, äußere Verschleißelement zusammen mit der Kupplungsösenbuchse abgerieben bzw. verschlissen, bis die Verschleißgrenze erreicht ist. Bei Erreichen der Verschleißgrenze unterliegt auch das elektrisch leitfähige Element dem Abrieb bzw. dem Verschleiß, welcher von außen auf die Kupplungsösenbuchse wirkt. Dabei wird das elektrisch leitfähige Element derart abgerieben, sodass es durchtrennt wird, sodass das elektrisch leitfähige Element keinen elektrischen Strom mehr übertragen bzw. keine elektrische Spannung mehr über das elektrische leitfähige Element anliegen kann, was von der Detektionseinheit erkannt werden kann. Somit kann seitens der Detektionseinheit selbsttätig auf das Erreichen der Verschleißgrenze geschlossen werden.

Eine entsprechende Information kann von der Detektionseinheit nach außen ausgegeben werden. Werden mehrere Verschleißdetektionsmittel verwendet, so kann die Information der Detektionseinheit auch eine Information enthalten, welche die Identifikation des jeweiligen verschlissenen bzw. durchtrennten elektrisch leitfähigen Elements bzw. dessen Detektionseinheit enthält, sodass der Ort des erreichten bzw. überschrittenen zulässigen Verschleißes erkannt werden kann.

In jedem Fall kann die Ausgabe einer entsprechenden Information mittels einer drahtlosen Kommunikationseinheit erfolgen, welche wenigstens Daten bzw. Informationen nach außerhalb der Kupplungsösenbuchse drahtlos aussenden und vorzugsweise ferner Daten und Informationen von außerhalb empfangen kann. Dies kann seitens der Detektionseinheit selbsttätig unmittelbar dann erfolgen, wenn die Verschleißgrenze erreicht ist, sodass von der Person bzw. vom Kraftfahrer hierauf sofort reagiert werden kann. Diese Information kann von der Detektionseinheit fortlaufend bzw. sich regelmäßig wiederholend ausgegeben werden, um sicherzustellen, dass diese Information die Person bzw. den Kraftfahrer erreicht. Die Ausgabe diese Information seitens der Detektionseinheit kann gegebenenfalls durch eine Eingangsbestätigung seitens der Person bzw. des Kraftfahrers beendet werden, um elektrische Energie seitens der Detektionseinheit zu sparen. Die Ausgabe diese Information seitens der Detektionseinheit kann gegebenenfalls zusätzlich oder alternativ erst bei einer Abfrage bzw. in Reaktion auf eine Aufforderung von außerhalb erfolgen, wie weiter unten noch näher beschrieben werden wird.

In jedem Fall kann die Ausgabe dieser Information seitens der Detektionseinheit derart an die Person bzw. an den Kraftfahrer erfolgen, dass diese Information drahtlos an ein elektronisches Empfangsgerät wie zum Beispiel an ein mobiles Endgerät zum Beispiel in Form eines Smartphones, eines Tablets oder dergleichen der Person bzw. des Kraftfahrers ausgesendet wird. Zusätzlich oder alternativ kann diese Information seitens der Detektionseinheit auch drahtlos an ein elektronisches Empfangsgerät des Zugfahrzeugs ausgesendet, dort empfangen sowie weiterverarbeitet und dem Kraftfahrer über ein Ausgabeelement wie insbesondere ein Anzeigeelement des Zugfahrzeugs ausgegeben bzw. angezeigt werden. Diese Information kann in diesem Fall gegebenenfalls von dem Zugfahrzeug bzw. dessen Steuerungseinheit drahtlos an ein Flottenmanagementsystem weitergeleitet werden, um dort den Austausch der verschlissenen Kupplungsösenbuchse berücksichtigen und planen zu können.

Gemäß einem weiteren Aspekt der Erfindung weist das Verschleißdetektionsmittel, vorzugsweise innerhalb eines Hohlraums der Kupplungsöse, vorzugsweise innerhalb eines Ringhohlraums der Kupplungsöse, und bzw. oder innerhalb eines Horizontalhohlraums der Kupplungsöse und bzw. oder eines Schaftes, wenigstens eine drahtlose Kommunikationseinheit, vorzugsweise eine drahtlose Sendeeinheit, auf, welche ausgebildet ist, wenigstens eine Information der Detektionseinheit drahtlos nach außerhalb der Kupplungsösenbuchse auszusenden. Hierdurch können die entsprechenden zuvor bereits beschriebenen Eigenschaften umgesetzt werden.

Gemäß einem weiteren Aspekt der Erfindung ist die drahtlose Kommunikationseinheit ausgebildet, von außerhalb der Kupplungsösenbuchse drahtlos zum Aussenden einer Information der Detektionseinheit aufgefordert zu werden. Hierdurch können die entsprechenden zuvor bereits beschriebenen Eigenschaften umgesetzt werden.

Gemäß einem weiteren Aspekt der Erfindung enthält die drahtlos ausgesendete Information der Detektionseinheit den Zustand des elektrisch leitfähigen Elements und bzw. oder eine aus dem Zustand des elektrisch leitfähigen Elements abgeleitete Information. Der Zustand des elektrisch leitfähigen Elements kann wenigstens dahingehend unterschieden werden, ob das elektrisch leitfähige Element durchtrennt ist oder nicht. Eine hieraus abgeleitete Information seitens der Detektionseinheit kann sein, dass die entsprechende Verschleißgrenze als erreicht oder noch nicht erreicht erkannt wird. Letztere Schlussfolgerung kann jedoch auch dort erfolgen, wo die drahtlos ausgesendete Information der Detektionseinheit empfangen und weiterverarbeitet wird, was die Umsetzung der Detektionseinheit vereinfachen und damit dort elektrische Energie, Kosten und bzw. oder Bauraum sparen kann.

Gemäß einem weiteren Aspekt der Erfindung ist das Verschleißdetektionsmittel, vorzugsweise wenigstens ein erstes Verschleißelement und ein zweites Verschleißelement, wenigstens zwei Mal, vorzugsweise einander diametral zur Längsachse gegenüberliegend, in der Kupplungsösenbuchse angeordnet. Dies kann die Anzahl der Stellen innerhalb der Kupplungsösenbuchse erhöhen, welche wie zuvor beschrieben auf Verschleiß überwacht werden können. Hierbei die beiden Verschleißdetektionsmittel einander diametral zur Längsachse gegenüberliegend, d. h. in der Ebene des Querschnitts um 180° zueinander versetzt, anzuordnen, kann es ermöglichen, den Verschleiß möglichst gleichmäßig verteilt überwachen zu können.

Gemäß einem weiteren Aspekt der Erfindung ist das Verschleißdetektionsmittel, vorzugsweise wenigstens ein erstes Verschleißelement und ein zweites Verschleißelement, wenigstens zwei Mal paarweise, vorzugsweise als Paar einander diametral zur Längsachse gegenüberliegend und besonders vorzugsweise paarweise rechtwinkelig zueinander versetzt, im Kupplungsabschnitt angeordnet. Somit können die insgesamt vier Verschleißelemente in einer Ebene des Querschnitts, insbesondere um 90° zueinander versetzt, angeordnet werden. Hierdurch kann die Gleichmäßigkeit der Überwachung der Kupplungsösenbuchse auf Verschleiß weiter erhöht werden.

Gemäß einem weiteren Aspekt der Erfindung ist die Detektionseinheit ausgebildet, die elektrische Leitfähigkeit aller elektrisch leitfähigen Elements zu überwachen und, vorzugsweise beim Durchtrennen wenigstens eines der elektrisch leitfähigen Elemente, eine entsprechende Information auszugeben. Hierdurch kann der Aufwand, mehrere Detektionseinheiten zu verwenden, vermieden werden, wobei gleichzeitig die eine Detektionseinheit entsprechend ausgebildet ist, alle elektrisch leitfähigen Elemente überwachen zu können. Dies kann gleichzeitig den elektrischen Energieverbrauch und bzw. oder den erforderlichen Bauraum reduzieren.

Gemäß einem weiteren Aspekt der Erfindung enthält die drahtlos ausgesendete Information der Detektionseinheit ferner eine Identifikation des durchtrennten elektrisch leitfähigen Elements. Dies kann die Unterscheidung der einzelnen elektrisch leitfähigen Elemente auch bei Verwendung einer einzigen Detektionseinheit ermöglichen.

Die Erfindung betrifft auch eine Kupplungsösenbuchse zur Verwendung in einer Kupplungsöse einer Kupplungsvorrichtung wie zuvor beschrieben. Hierdurch kann eine Kupplungsösenbuchse zur Verfügung gestellt werden, um eine Kupplungsvorrichtung mit den zuvor beschriebenen Aspekten umsetzen und nutzen zu können.

Die Erfindung betrifft auch ein hinteres Fahrzeug mit einer Kupplungsvorrichtung wie zuvor beschrieben. Hierdurch können die zuvor beschriebenen Aspekte einer erfindungsgemäßen Kupplungsvorrichtung bei einem hinteren Fahrzeug umgesetzt und dort genutzt werden.

Die Erfindung betrifft ferner ein Fahrzeugverbund mit einem hinteren Fahrzeug wie zuvor beschrieben. Hierdurch kann ein Fahrzeugverbund geschaffen werden, um dort die zuvor beschriebenen Aspekte einer erfindungsgemäßen Kupplungsvorrichtung bei dessen hinteren Fahrzeug umzusetzen und zu nutzen.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine schematische Seitenansicht eines erfindungsgemäßen Fahrzeugverbundes mit einer erfindungsgemäßen zweiten Kupplungsvorrichtung gemäß eines ersten Ausführungsbeispiels;
- Figur 2: eine Detailansicht der Figur 1, teilweise als Schnittdarstellung;
- Figur 3: eine schematische seitliche Darstellung, teilweise im Schnitt, der erfindungsgemäßen zweiten Kupplungsvorrichtung gemäß des ersten Ausführungsbeispiels;
- Figur 4: eine schematische seitliche Darstellung, teilweise im Schnitt, einer erfindungsgemäßen zweiten Kupplungsvorrichtung gemäß eines zweiten Ausführungsbeispiels;
- Figur 5: eine schematische seitliche Darstellung, teilweise im Schnitt, einer erfindungsgemäßen zweiten Kupplungsvorrichtung gemäß eines dritten Ausführungsbeispiels; und
- Figur 6: einen Querschnitt durch den Übergangsabschnitt der zweiten Kupplungsvorrichtung gemäß der zweiten Ausführungsbeispiels der Figur 4.

Die o.g. Figuren werden in kartesischen bzw. in zylindrischen Koordinaten betrachtet. Es erstreckt sich in kartesischen Koordinaten eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann. Die Längsrichtung X und die Querrichtung Y bilden gemeinsam die Horizontale X, Y, welche auch als horizontale Ebene X, Y bezeichnet werden kann. In der vertikalen Richtung Z erstreckt sich auch in zylindrischen Koordinaten eine Längsachse X'. Senkrecht zur Längsachse X' erstreckt sich eine radiale Richtung R von der Längsachse X' weg. Senkrecht zur radialen Richtung R und um die Längsachse X' herum erstreckt sich eine Umfangsrichtung U.

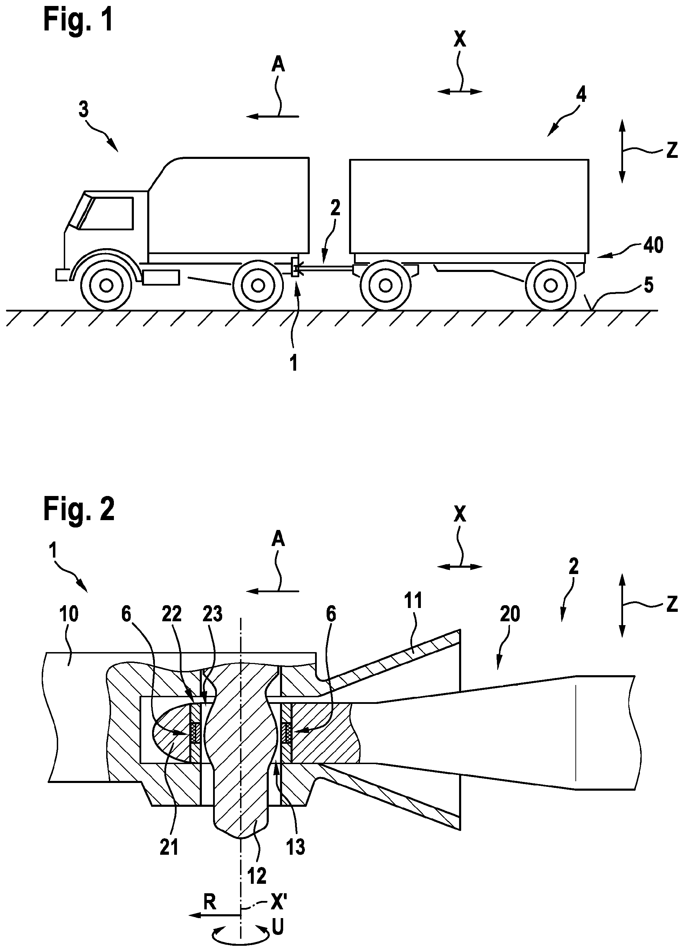

Figur 1 zeigt eine schematische Seitenansicht eines erfindungsgemäßen Fahrzeugverbundes 3, 4 mit einer Anhängekupplung 1, 2 mit einer erfindungsgemäßen zweiten Kupplungsvorrichtung 2 gemäß eines ersten Ausführungsbeispiels. In einer Fahrtrichtung A, welche auch als Bewegungsrichtung A oder als Zugrichtung A bezeichnet werden kann, weist der Fahrzeugverbund 3, 4 ein in Zugrichtung A vorderes Fahrzeug 3, welches auch als Zugfahrzeug 3 bezeichnet werden kann, und ein in Zugrichtung A hinteres Fahrzeug 4 auf, welches auch als Anhänger 4 bezeichnet werden kann. Der Fahrzeugverbund 3, 4 kann eine Fahrtbewegung in der Fahrtrichtung A auf einem Untergrund 5 ausführen.

An dem Zugfahrzeug 3 ist in der Längsrichtung X an dessen Heck eine erste Kupplungsvorrichtung 1 feststehend angeordnet, welche in der Längsrichtung X zum Anhänger 4 hin zeigt. In der Längsrichtung X ist ferner eine zweite erfindungsgemäße Kupplungsvorrichtung 2 an der Vorderseite des Anhängers 4 dem Zugfahrzeug 3 zugewandt feststehend an einem Gestell 40 bzw. an einem Rahmen 40 des Anhängers 4 feststehend angeordnet. Die beiden Kupplungsvorrichtungen 1, 2 verbinden das Zugfahrzeug 3 kraftübertragend in der Längsrichtung X mit dem Anhänger 4 und bilden so gemeinsam die Anhängekupplung 1, 2, welche auch als Anhängekupplungssystem 1, 2 bezeichnet werden kann.

Figur 2 zeigt eine Detailansicht der Figur 1, teilweise als Schnittdarstellung. Die Anhängekupplung 1, 2 gemäß des ersten Ausführungsbeispiels der Figuren 1 bis 3 ist als Bolzenkupplung bzw. als Bolzenkupplungssystem ausgeführt. Entsprechend weist die erste Kupplungsvorrichtung 1 des Zugfahrzeugs 3 eine Kupplungsaufnahme 10 mit einem Kupplungsmaul 11 auf, welche in der Längsrichtung X eine Kupplungsöse 21 eines Schafts 20 der zweiten Kupplungsvorrichtung 2 aufnimmt. Die Kupplungsöse 21 der zweiten Kupplungsvorrichtung 2 kann auch als Zugöse 21 bezeichnet werden. Die Kupplungsöse 21 ist ringförmig an dem Ende des Schafts 20 mit diesem einstückig, d. h. integral, ausgebildet, welches vom Anhänger 4 weg zeigt. Die Kupplungsöse 21 weist mittig eine Aussparung (nicht bezeichnet) auf, welche von einer erfindungsgemäßen Kupplungsösenbuchse 22 ausgefüllt wird. Die Kupplungsösenbuchse 22 kann auch als Zugösenbuchse 22 bezeichnet werden.

Die Kupplungsösenbuchse 22 bildet mittig ein in der vertikalen Richtung Z verlaufendes Kupplungsauge 23 aus, in welches ein Kupplungsbolzen 12 der ersten Kupplungsvorrichtung 1 in der vertikalen Richtung Z von oben eingeführt wird, um eine formschlüssige Verbindung der beiden Kupplungsvorrichtung 1, 2 herzustellen. Das Kupplungsauge 23 kann auch als Kupplungsösenauge 23, als Zugösenauge 23 oder als Zugösenbuchse 23 bezeichnet werden. Der Schaft 20 kann auch als Anhängerschaft 20 oder als Zugschaft 20 bezeichnet werden. Der Schaft 20 kann auch als Deichsel 20 oder als Anhängerdeichsel 20 bezeichnet werden. Der Kupplungsbolzen 12 bzw. dessen Körper ist metallisch einstückig, d. h. integral, sowie an sich rotationsymmetrisch zur Längsachse X' ausgebildet.

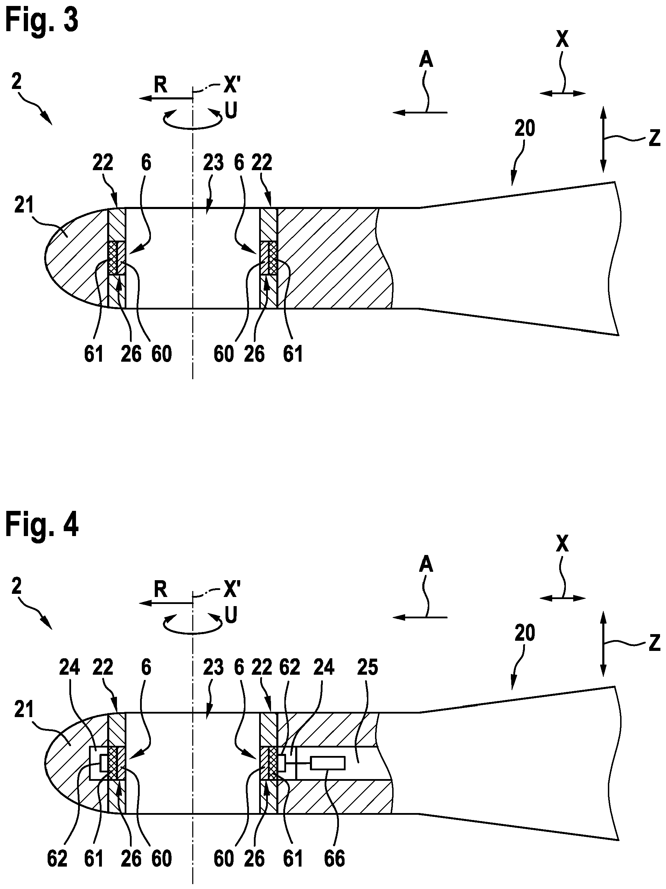

Figur 3 zeigt eine schematische seitliche Darstellung, teilweise im Schnitt, der erfindungsgemäßen zweiten Kupplungsvorrichtung 2 gemäß des ersten Ausführungsbeispiels. Die Kupplungsösenbuchse 22 ist aus Metall ringförmig und rotationssymmetrisch zur Längsachse X' ausgebildet und bildet die radial innere Fläche, in der Umfangsrichtung U geschlossen, der Kupplungsöse 21 der zweiten Kupplungsvorrichtung 2. Die Kupplungsösenbuchse 22 nimmt im angekoppelten Zustand des Anhängers 4 an dem Zugfahrzeug 3 dessen Kupplungsbolzen 12 auf und umschließt den Kupplungsbolzen 12 in der Umfangsrichtung U vollständig. Hierdurch kann es im Betrieb des Fahrzeugverbundes 3, 4 mit Anhänger 4 und Zugfahrzeug 3 zu einem Abrieb bzw. zu einem Verschleiß der zylindrischen Innenfläche der Kupplungsösenbuchse 22 kommen, welcher im Laufe der Zeit den Querschnitt bzw. die Materialstärke der Kupplungsösenbuchse 22 der zweiten Kupplungsvorrichtung 2 derart schwächen kann, dass eine sichere Kraftübertragung zwischen Anhänger 4 und Zugfahrzeug 3 über die Kupplungsösenbuchse 22 bzw. über die Kupplungsöse 21 nicht mehr gewährleistet werden kann.

Erfindungsgemäß kann der Verschleiß der Kupplungsösenbuchse 22 gemäß des ersten Ausführungsbeispiels der Figuren 1 bis 3 von einer Person wie zum Beispiel von dem Kraftfahrer des Fahrzeugverbundes 3, 4 einfacher, schneller und bzw. oder häufiger als bisher bekannt dadurch kontrolliert bzw. überwacht werden, indem in der Kupplungsösenbuchse 22 einander diametral in der Längsrichtung X gegenüberliegend auf jeder Seite ein durchgängiger Horizontalhohlraum 26 vorhanden ist, welcher sich jeweils von der Innenseite der zylindrischen Innenfläche der Kupplungsösenbuchse 22 radial von der Längsachse X' weg zur gegenüberliegenden Außenfläche der Kupplungsösenbuchse 22 erstreckt. In den beiden Horizontalhohlräumen 26 ist jeweils ein Verschleißdetektionsmittel 6 eingebracht, welches dort stoffschlüssig, beispielsweise durch ein Klebemittel zwischen der Innenfläche des Horizontalhohlraums 26 und der Außenfläche des Verschleißdetektionsmittels 6, oder kraftschlüssig, beispielsweise durch ein zumindest geringes Übermaß der Außenkontur des Verschleißdetektionsmittels 6 gegenüber dem Horizontalhohlraum 26, gehalten wird.

Beide Verschleißdetektionsmittel 6 weisen randseitig nach radial innen gerichtet ein erstes, inneres farbliches Verschleißelement 60 auf, dem sich jeweils nach radial außen gerichtet ein zweites, äußeres farbliches Verschleißelement 61 anschließt. Die beiden ersten, inneren farblichen Verschleißelemente 60 sind stoffschlüssig, zum Beispiel durch Kleben oder durch eine einstückige, d. h. integrale, Herstellung, mit dem jeweiligen zweiten, äußeren farblichen Verschleißelement 61 verbunden. Die Begriffe "innen" und "außen" hinsichtlich der farblichen Verschleißelemente 60, 61 sind dabei radial in zylindrischen Koordinaten zu verstehen.

Die beiden ersten, inneren farblichen Verschleißelemente 60 weisen eine andere Farbe als die zweiten, äußeren farblichen Verschleißelemente 61 auf. Vorzugsweise sind die beiden ersten, inneren farblichen Verschleißelemente 60 grün, insbesondere neongrün, und die zweiten, äußeren farblichen Verschleißelemente 61 rot, insbesondere neonrot, ausgebildet. Der Übergang bzw. die Grenze zwischen einem ersten, inneren farblichen Verschleißelement 60 und dem entsprechenden zweiten, äußeren farblichen Verschleißelement 61 ist durch die Dimensionierung der Verschleißelemente 60, 61 derart vorgesehen, dass dieser Übergang der zulässigen Verschleißgrenze des Kupplungsabschnitts 13 der Kupplungsösenbuchse 22 entspricht.

Ist der Anhänger 4 ohne Zugfahrzeug 3, d.h. es befindet sich kein Kupplungsbolzen 12 im Eingriff mit der zweiten Kupplungsvorrichtung 2 bzw. mit dessen Kupplungsösenbuchse 22, so ist die erfindungsgemäße Kupplungsösenbuchse 22 schräg zur horizontalen Ebene X, Y zugänglich und kann insbesondere von der Person wie zum Beispiel von dem Kraftfahrer, welcher das Zugfahrzeug 3 mit seinem Anhänger 4 verbinden möchte, optisch betrachtet werden. Hierbei kann die Person die Verschleißdetektionsmittel 6 der Kupplungsösenbuchse 22 von wenigstens einer Seite oder seitlich von zwei Seiten mit dem Auge erkennen und feststellen, ob (jeweils) das erste, innere farbliche Verschleißelement 60 oder das zweite, äußere Verschleißelement 61 nach außen sichtbar ist.

Erkennt die Person das erste, innere farbliche Verschleißelement 60, so kann hieraus geschlussfolgert werden, dass an dieser Stelle der Kupplungsösenbuchse 22 der zweiten Kupplungsvorrichtung 2 der Verschleiß des Materials der Kupplungsösenbuchse 22, welcher entsprechend auch das jeweilige Verschleißdetektionsmittel 6 in seiner radialen Erstreckung reduziert, noch in einem zulässigen Maß liegt. Erkennt die Person das zweite, äußere farbliche Verschleißelement 61, so kann hieraus geschlussfolgert werden, dass an dieser Stelle der Kupplungsösenbuchse 22 der zweiten Kupplungsvorrichtung 2 das erste, innere farbliche Verschleißelement 60 vollständig abgerieben und daher das radial darunterliegende zweite, äußere farbliche Verschleißelement 61 von außen sichtbar ist. Dies bedeutet, dass an dieser Stelle der Kupplungsösenbuchse 22 der zweiten Kupplungsvorrichtung 2 der zulässige Verschleiß bereits erreicht bzw. überschritten ist und der Anhänger 4 nicht mehr verkehrssicher am Zugfahrzeug 3 verwendet werden kann. Vielmehr ist die Kupplungsösenbuchse 22 der zweiten Kupplungsvorrichtung 2 auszutauschen.

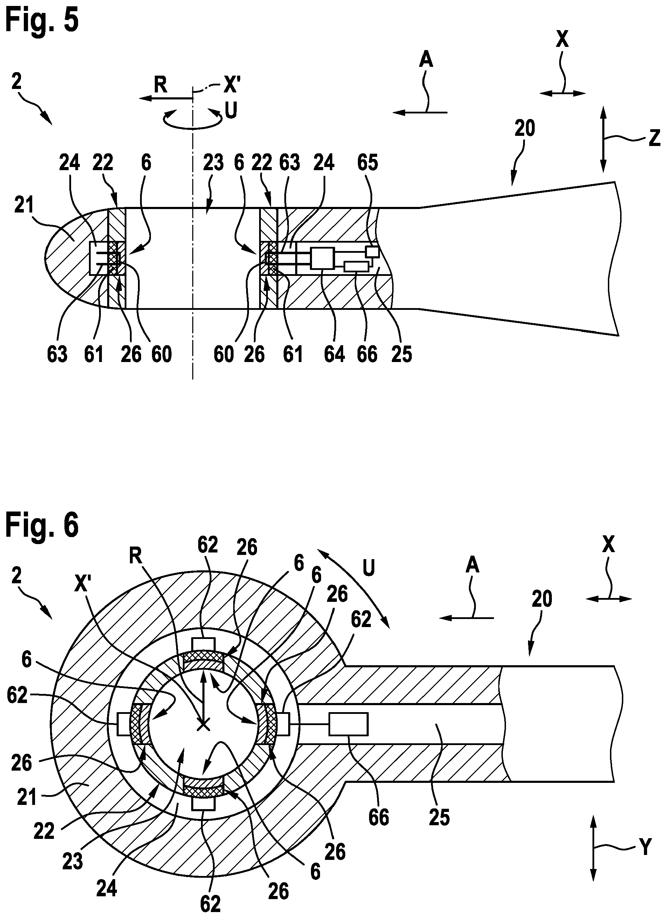

Figur 4 zeigt eine schematische seitliche Darstellung, teilweise im Schnitt, eines erfindungsgemäßen zweiten Kupplungsvorrichtung 2 gemäß eines zweiten Ausführungsbeispiels. In diesem Fall ist ferner ein Hohlraum 24 der Kupplungsöse 21 in Form eines Ringhohlraums 24 kreisförmig um die Längsachse X' herum vorgesehen, in welchem die zuvor beschriebenen Horizontalhohlräume 26 der Kupplungsösenbuchse 22 jeweils radial münden, siehe zum Beispiel Figur 6. Der Ringhohlraum 24 der Kupplungsöse 21 ist somit als nutartige Vertiefung radial zur Längsachse X' offen ausgebildet und wird durch die eingepresste Kupplungsösenbuchse 22 zu einem Kanal verschlossen. Auf der Achse der Längsrichtung X, welche mittig entlang des Schaftes 20 der zweiten Kupplungsvorrichtung 2 verläuft, geht der Ringhohlraum 24 der Kupplungsöse 21 in einen Horizontalhohlraum 25 über welche sich durch die Kupplungsöse 21 hindurch in den Schaft 20 und durch diesen vollständig hindurch erstreckt. Entsprechend kann der Horizontalhohlraum 25 von außen, d.h. der Kupplungsöse 21 abgewandt, entlang der Achse der Längsrichtung X mittels einer Bohrung in die zweite Kupplungsvorrichtung 2 eingebracht und daher auch als Kernbohrung 25 bezeichnet werden.

Ebenso wie beim ersten Ausführungsbeispiel der Figuren 1 bis 3 sind auch beim zweiten Ausführungsbeispiel der Figuren 4 und 6 mehrere Horizontalhohlräume 26 durch die Kupplungsösenbuchse 22 hindurch vorhanden, welche jeweils mit einem Verschleißdetektionsmittel 6 gefüllt sind, wie zuvor beschrieben. Da weist die zweite Kupplungsvorrichtung 2 gemäß des zweiten Ausführungsbeispiels der Figuren 4 und 6 jedoch vier statt zwei Verschleißdetektionsmittel 6 auf, welche um 90° versetzt zueinander in der Längsrichtung X bzw. in der Querrichtung Y angeordnet sind, siehe Figur 6. Pro Verschleißdetektionsmittel 6 ist jeweils das erste, innere farbliche Verschleißelement 60 wie zuvor beschrieben angeordnet und es schließt sich jeweils das zweite, äußere farbliche Verschleißelement 61 wie zuvor beschrieben an, welches sich nach radial außen bis zum jeweiligen Ende des Horizontalhohlraums 26 der Kupplungsösenbuchse 22 erstreckt. Die Verschleißelemente 60, 61 sind wie zuvor beschrieben farblich unterschiedlich ausgebildet, wobei das jeweilige Material ferner jeweils lichtdurchlässig ausgebildet ist.

An den radial äußeren Enden der zweiten, äußeren farblichen Verschleißelemente 61 ist jeweils ein Leuchtmittel 62 in Form einer LED 62 derart radial innen gerichtet angeordnet, sodass die Verschleißelemente 60, 61 vom Licht der jeweiligen LED 62 radial nach innen durchleuchtet werden, wenn die LED 62 betrieben wird. Die Speisung der LEDs 62 mit elektrischer Energie für einen durchgängigen bzw. dauerhaften Betrieb kann seitens eines elektrischen Energiespeichers 66 in Form einer Batterie 66 erfolgen, welche innerhalb des Horizontalhohlraums 25 der Kupplungsöse 21 bzw. des Schaftes 20 angeordnet ist. Der Betrieb der LEDs 62 kann bei Montage der zweiten Kupplungsvorrichtung 2 am Anhänger 4 gestartet werden und anhalten, bis die elektrische Energie der Batterie 66 verbraucht ist.

Auch in diesem Fall des zweiten Ausführungsbeispiels der Figuren 4 und 6 können die entsprechenden Stellen der Kupplungsösenbuchse 22 der zweiten Kupplungsvorrichtung 2 von einer Person wie zuvor hinsichtlich des ersten Ausführungsbeispiels der Figuren 1 bis 3 beschrieben optisch auf Verschleiß kontrolliert werden. Hierbei kann von der Person jeweils ein Licht in der Farbe des ersten, inneren farblichen Verschleißelements 60 optisch wahrgenommen werden, solange, wie zuvor beschrieben, die Verschleißgrenze eingehalten wird. Ist an einer Stelle der Kupplungsösenbuchse 22 der zweiten Kupplungsvorrichtung 2 die Verschleißgrenze erreicht bzw. überschritten, so ist das erste, innere farbliche Verschleißelement 60 an dieser Stelle abgerieben und das Licht der entsprechenden LED 62 tritt nach außen, d.h. nach radial innen, in der Farbe des zweiten, äußeren farblichen Verschleißelements 61 aus.

Entsprechend kann von der Person eine Unterscheidung zwischen einem zulässigen oder unzulässigen Verschleiß aufgrund der Farbe des Lichts erfolgen, welches an der jeweiligen Stelle optisch wahrgenommen werden kann. Hierdurch kann die erfindungsgemäße Verschleißkontrolle der Kupplungsösenbuchse 22 der zweiten Kupplungsvorrichtung 2 gemäß des ersten Ausführungsbeispiels der Figuren 1 bis 3 für die Person dahingehend verbessert werden, dass die farblich leuchtenden Verschleißdetektionsmittel 6, insbesondere bei Dunkelheit bzw. bei schlechten Sichtverhältnissen zum Beispiel bei Regen oder bei Nebel oder auch bei Verschmutzung der Innenfläche der Kupplungsösenbuchse 22 der zweiten Kupplungsvorrichtung 2, besser bzw. verlässlicher wahrgenommen werden können als ohne diese Hinterleuchtung. Insbesondere kann die Person bei Dunkelheit bzw. bei schlechten Sichtverhältnissen darauf verzichten, die Kupplungsösenbuchse 22 der zweiten Kupplungsvorrichtung 2 zum Beispiel mit einer Taschenlampe anzuleuchten, um die Verschleißdetektionsmittel 6 optisch erkennen zu können. Ebenso kann der Aufwand entfallen, eine verschmutzte Oberfläche der Kupplungsösenbuchse 22 der zweiten Kupplungsvorrichtung 2reinigen bzw. abwischen zu müssen, um die Verschleißdetektionsmittel 6 optisch erkennen zu können.

Figur 5 zeigt eine schematische seitliche Darstellung, teilweise im Schnitt, eines erfindungsgemäßen zweiten Kupplungsvorrichtung 2 gemäß eines dritten Ausführungsbeispiels. In diesem Fall ist die Kupplungsösenbuchse 22 wie im zweiten Ausführungsbeispiel der Figuren 4 und 6 beschrieben ausgebildet, was auch für die Erstreckung der Verschleißelemente 60, 61 gilt, welche farblich wie im ersten Ausführungsbeispiel der Figuren 1 bis 3 beschrieben oder auch mit der gleichen, unbestimmten Farbe ausgebildet sein können.

In jedem Fall erstreckt sich jeweils ein elektrisch leitfähiges Element 63 in Form einer Leiterschleife 63 derart durch das jeweilige zweite, äußere Verschleißelement 61 hindurch, dass die Leiterschleifen 63 an der Grenze zwischen dem ersten, inneren Verschleißelement 60 und dem zweiten, äußeren Verschleißelement 61 verläuft bzw. umkehrt. Alle Leiterschleifen 63 sind elektrisch leitfähig mit einer Detektionseinheit 64 verbunden, welche innerhalb des Horizontalhohlraums 25 der Kupplungsöse 21 bzw. des Schaftes 20 angeordnet ist und auch als Steuerungseinheit 64 bezeichnet werden kann. Die Detektionseinheit 64 ist signalübertragend mit einer drahtlosen Kommunikationseinheit 65 verbunden, welche ebenfalls innerhalb des Horizontalhohlraums 25 der Kupplungsöse 21 bzw. des Schaftes 20 angeordnet ist und zumindest drahtlose Signale aussenden kann, weshalb die drahtlose Kommunikationseinheit 65 auch als Sendeeinheit 65 bezeichnet werden kann. Sowohl die Detektionseinheit 64 als auch die Sendeeinheit 65 sind elektrisch leitfähig mit der Batterie 66 verbunden und werden durch elektrische Energie der Batterie 66 betrieben.

Erreicht in diesem Fall der Verschleiß der Kupplungsösenbuchse 22 an einer Stelle die Verschleißgrenze, so wird hierdurch die entsprechende Leiterschleifen 63 abgerieben und durchtrennt. Seitens der Detektionseinheit 64 kann für jede der Leiterschleifen 63 festgestellt werden, ob die Leiterschleifen 63 durchgängig elektrisch leitfähig geschlossen oder durchtrennt ist. Dies kann beispielsweise durch das Anlegen einer Meßspannung seitens der Detektionseinheit 64 erfolgen. Hierdurch kann seitens der Detektionseinheit 64 für die Stellen der Kupplungsösenbuchse 22 der zweiten Kupplungsvorrichtung 2, an welchen die Leiterschleifen 63 vorgesehen sind, unterschieden werden, ob dort der Verschleiß ein noch zulässiges Maß aufweist oder nicht. Eine entsprechende Information kann von der Detektionseinheit 64 mittels der Sendeeinheit 65 nach außerhalb der zweiten Kupplungsvorrichtung 2 drahtlos ausgesendet werden.

Diese Information kann beispielsweise von einem Handgerät wie zum Beispiel von einem mobilen Endgerät wie zum Beispiel von einem Smartphone einer Person bzw. des Kraftfahrers des Fahrzeugverbundes 3, 4 empfangen und dort angezeigt werden. Das Aussenden dieser Information kann durchgängig erfolgen, was jedoch den Verbrauch elektrischer Energie erhöhen kann. Das Aussenden dieser Information kann auch erst dann erfolgen, wenn die Person bzw. der Kraftfahrer die erfindungsgemäße zweite Kupplungsvorrichtung 2 durch eine entsprechende Information hierzu auffordert, was ebenfalls seitens des Smartphones erfolgen kann. Hierdurch kann die entsprechende Information bei Bedarf abgefragt werden, was elektrischen Energieverbrauch der erfindungsgemäßen zweiten Kupplungsvorrichtung 2 reduzieren und damit die Betriebsdauer der Detektionseinheit 64 sowie der Sendeeinheit 65 erhöhen kann.

Diese Information kann beispielsweise auch von einer Steuerungseinheit der Zugfahrzeugs 3 empfangen und dort dem Kraftfahrer angezeigt werden. Auch in diesem Fall kann das Aussenden der Informationen seitens der erfindungsgemäßen zweiten Kupplungsvorrichtung 2 durchgängig oder erst nach Aufforderung durch die Steuerungseinheit des Zugfahrzeugs 3 erfolgen. In jedem Fall kann die erhaltene Information dem Kraftfahrer des Zugfahrzeugs 3 angezeigt werden, um insbesondere während des Betriebs des Fahrzeugverbundes 3, 4 über den verkehrssicheren Zustand der Kupplungsösenbuchse 22 der zweiten Kupplungsvorrichtung 2 informiert zu sein.

In jedem Fall kann seitens der Detektionseinheit 64 zwischen den verschiedenen Leiterschleifen 63 unterschieden werden, sodass in den nach außen ausgesendeten Informationen auch eine Identifikation der jeweiligen Leiterschleifen 63 enthalten sein kann. Erreicht somit eines der ersten, inneren Verschleißelemente 60 seine Grenze und die entsprechende Leiterschleifen 63 wird durchtrennt, kann der Person bzw. dem Kraftfahrer konkret mitgeteilt werden, an welcher Stelle der Kupplungsösenbuchse 22 der zweiten Kupplungsvorrichtung 2 der zulässige Verschleiß erreicht bzw. unterschritten wird.

### BEZUGSZEICHENLISTE (Teil der Beschreibung)

- A: Fahrtrichtung; Bewegungsrichtung; Zugrichtung
- X: Längsrichtung; Tiefe; Länge
- Y: Querrichtung; Breite
- Z: vertikale Richtung; Höhe
- X, Y: Horizontale; horizontale Ebene
- R: radiale Richtung
- U: Umfangsrichtung
- X': Längsachse

- 1, 2: Anhängekupplung; Anhängekupplungssystem; Kupplungsvorrichtungen

- 1: erste Kupplungsvorrichtung des in Zugrichtung A vorderen Fahrzeugs 3
- 10: Kupplungsaufnahme
- 11: Kupplungsmaul
- 12: Kupplungsbolzen
- 13: Kupplungsabschnitt

- 2: zweite Kupplungsvorrichtung des in Zugrichtung A hinteren Fahrzeugs 4
- 20: (Anhänger-)Deichsel; (Anhänger-/Zug-)Schaft
- 21: Kupplungsöse; Zugöse
- 22: Kupplungsösenbuchse;Zugösenbuchse
- 23: Kupplungsauge; Kupplungsösenauge; Zugösenauge
- 24: Hohlraum bzw. Ringhohlraum der Kupplungsöse 21
- 25: Horizontalhohlraum der Kupplungsöse 21 und/oder des Schaftes 20; Kernbohrung
- 26: Horizontalhohlraum der Kupplungsösenbuchse 22

- 3, 4: Fahrzeugverbund

- 3: in Zugrichtung A vorderes Fahrzeug; Zugfahrzeug

- 4: in Zugrichtung A hinteres Fahrzeug; Anhänger
- 40: Gestell; Rahmen

- 5: Untergrund
- 6: Verschleißdetektionsmittel
- 60: erste, innere (farbliche) Verschleißelemente
- 61: zweite, äußere (farbliche) Verschleißelemente
- 62: Leuchtmittel; LEDs
- 63: elektrisch leitfähige Elemente; Leiterschleifen
- 64: Detektionseinheit; Steuerungseinheit
- 65: drahtlose Kommunikationseinheit bzw. drahtlose Sendeeinheit
- 66: elektrischer Energiespeicher; Batterie

## Patentansprüche

1. Kupplungsvorrichtung (2) für ein in Zugrichtung (A) hinteres Fahrzeug (4) eines Fahrzeugverbundes (3, 4),
mit einer Kupplungsöse (21) mit einer Kupplungsösenbuchse (22), dessen Kupplungsauge (23) sich entlang einer Längsachse (X') erstreckt,
**gekennzeichnet durch**
wenigstens ein, vorzugsweise entlang der Längsachse (X') mittig angeordnetes, Verschleißdetektionsmittel (6), welches senkrecht zur Längsachse (X') ausgerichtet derart wenigstens in der Kupplungsösenbuchse (22) angeordnet ist, sodass ein Verschleiß der Kupplungsösenbuchse (22) senkrecht zur Längsachse (X') optisch und/oder sensorisch erkannt werden kann.

2. Kupplungsvorrichtung (2) nach Anspruch 1, **dadurch gekennzeichnet, dass**
das Verschleißdetektionsmittel (6) in wenigstens einem Horizontalhohlraum (26) der Kupplungsösenbuchse (22) angeordnet ist,
wobei das Verschleißdetektionsmittel (6)
wenigstens ein erstes Verschleißelement (60) einer ersten Farbe, welches zwischen dem inneren Rand des Horizontalhohlraums (26) der Kupplungsösenbuchse (22) und einer Verschleißgrenze angeordnet ist, und
wenigstens ein zweites Verschleißelement (61) einer zweiten, unterschiedlichen Farbe aufweist, welches innerhalb der Verschleißgrenze angeordnet ist.

3. Kupplungsvorrichtung (2) nach Anspruch 2, **dadurch gekennzeichnet, dass**
das Verschleißdetektionsmittel (6) wenigstens ein Leuchtmittel (62) aufweist, welches innerhalb des Horizontalhohlraums (26) der Kupplungsösenbuchse (22) und/oder innerhalb eines Hohlraums (24) der Kupplungsöse (21), vorzugsweise innerhalb eines Ringhohlraums (24) der Kupplungsöse (21), angeordnet und ausgebildet ist, das erste Verschleißelement (60) durch das zweite Verschleißelement (61) hierdurch zu durchleuchten.

4. Kupplungsvorrichtung (2) nach Anspruch 3, **dadurch gekennzeichnet, dass**
das Verschleißdetektionsmittel (6), vorzugsweise innerhalb eines Hohlraums (24) der Kupplungsöse (21), vorzugsweise innerhalb eines Ringhohlraums (24) der Kupplungsöse (21), und/oder innerhalb eines Horizontalhohlraums (25) der Kupplungsöse (21) und/oder eines Schaftes (20), wenigstens einen elektrischen Energiespeicher (66) aufweist, welcher ausgebildet ist, wenigstens das Leuchtmittel (62), vorzugsweise ferner eine Detektionseinheit (64) und/oder eine drahtlose Kommunikationseinheit (65), elektrisch zu versorgen.

5. Kupplungsvorrichtung (2) nach einem der vorangehenden Ansprüche, **dadurch gekennzeichnet, dass**
das Verschleißdetektionsmittel (6) in wenigstens einem Horizontalhohlraum (26) der Kupplungsösenbuchse (22) angeordnet ist,
wobei das Verschleißdetektionsmittel (6)
wenigstens ein erstes Verschleißelement (60), welches zwischen dem inneren Rand des Horizontalhohlraums (26) der Kupplungsösenbuchse (22) und einer Verschleißgrenze angeordnet ist, und
wenigstens ein zweites Verschleißelement (61) aufweist, welches innerhalb der Verschleißgrenze angeordnet ist,
wobei an der Verschleißgrenze wenigstens ein elektrisch leitfähiges Element (63) eines elektrischen Kreises derart angeordnet ist, sodass das elektrisch leitfähige Element (63) durch den Verschleiß der Kupplungsösenbuchse (22) durchtrennt wird, wenn der Verschleiß die Verschleißgrenze erreicht,
wobei das Verschleißdetektionsmittel (6), vorzugsweise innerhalb eines Hohlraums (24) der Kupplungsöse (21), vorzugsweise innerhalb eines Ringhohlraums (24) der Kupplungsöse (21), und/oder innerhalb eines Horizontalhohlraums (25) der Kupplungsöse (21) und/oder eines Schaftes (20), eine Detektionseinheit (64) aufweist, welche ausgebildet ist, die elektrische Leitfähigkeit des elektrisch leitfähigen Elements (63) zu überwachen und, vorzugsweise beim Durchtrennen des elektrisch leitfähigen Elements (63), eine entsprechende Information auszugeben.

6. Kupplungsvorrichtung (2) nach Anspruch 5, **dadurch gekennzeichnet, dass**
das Verschleißdetektionsmittel (6), vorzugsweise innerhalb eines Hohlraums (24) der Kupplungsöse (21), vorzugsweise innerhalb eines Ringhohlraums (24) der Kupplungsöse (21), und/oder innerhalb eines Horizontalhohlraums (25) der Kupplungsöse (21) und/oder eines Schaftes (20), wenigstens eine drahtlose Kommunikationseinheit (65), vorzugsweise eine drahtlose Sendeeinheit (65), aufweist, welche ausgebildet ist, wenigstens eine Information der Detektionseinheit (64) drahtlos nach außerhalb der Kupplungsöse (21) auszusenden.

7. Kupplungsvorrichtung (2) nach Anspruch 6, **dadurch gekennzeichnet, dass**
die drahtlose Kommunikationseinheit (65) ausgebildet ist, von außerhalb der Kupplungsöse (21) drahtlos zum Aussenden einer Information der Detektionseinheit (64) aufgefordert zu werden.

8. Kupplungsvorrichtung (2) nach Anspruch 6 oder 7, **dadurch gekennzeichnet, dass**
die drahtlos ausgesendete Information der Detektionseinheit (64) den Zustand des elektrisch leitfähigen Elements (63) und/oder eine aus dem Zustand des elektrisch leitfähigen Elements (63) abgeleitete Information enthält.

9. Kupplungsvorrichtung (2) nach einem der vorangehenden Ansprüche, **dadurch gekennzeichnet, dass**
das Verschleißdetektionsmittel (6), vorzugsweise wenigstens ein erstes Verschleißelement (60) und ein zweites Verschleißelement (61), wenigstens zwei Mal, vorzugsweise einander diametral zur Längsachse (X') gegenüberliegend, in der Kupplungsösenbuchse (22) angeordnet ist.

10. Kupplungsvorrichtung (2) nach einem der vorangehenden Ansprüche, **dadurch gekennzeichnet, dass**
das Verschleißdetektionsmittel (6), vorzugsweise wenigstens ein erstes Verschleißelement (60) und ein zweites Verschleißelement (61), wenigstens zwei Mal paarweise, vorzugsweise als Paar einander diametral zur Längsachse (X') gegenüberliegend und besonders vorzugsweise paarweise rechtwinkelig zueinander versetzt, in der Kupplungsösenbuchse (22) angeordnet ist.

11. Kupplungsvorrichtung (2) nach einem der Ansprüche 5 bis 8 und nach einem der Ansprüche 9 oder 10, **dadurch gekennzeichnet, dass**
die Detektionseinheit (64) ausgebildet ist, die elektrische Leitfähigkeit aller elektrisch leitfähigen Elements (63) zu überwachen und, vorzugsweise beim Durchtrennen wenigstens eines der elektrisch leitfähigen Elemente (63), eine entsprechende Information auszugeben.

12. Kupplungsvorrichtung (2) nach Anspruch 11, **dadurch gekennzeichnet, dass**
die drahtlos ausgesendete Information der Detektionseinheit (64) ferner eine Identifikation des durchtrennten elektrisch leitfähigen Elements (63) enthält.

13. Kupplungsösenbuchse (22) zur Verwendung in einer Kupplungsöse (21) einer Kupplungsvorrichtung (2) für ein in Zugrichtung (A) hinteres Fahrzeug (4) eines Fahrzeugverbundes (3, 4), dessen Kupplungsauge (23) sich entlang einer Längsachse (X') erstreckt,
**gekennzeichnet durch**
wenigstens ein, vorzugsweise entlang der Längsachse (X') mittig angeordnetes, Verschleißdetektionsmittel (6), welches senkrecht zur Längsachse (X') ausgerichtet derart wenigstens in der Kupplungsösenbuchse (22) angeordnet ist, sodass ein Verschleiß der Kupplungsösenbuchse (22) senkrecht zur Längsachse (X') optisch und/oder sensorisch erkannt werden kann.

14. Hinteres Fahrzeug (4) mit einer Kupplungsvorrichtung (2) nach einem der Ansprüche 1 bis 12.

15. Fahrzeugverbund (3, 4) mit einem hinteren Fahrzeug (4) nach Anspruch 14.

## Claims

1. A coupling device (2) for a vehicle (4) at the rear, in the direction of travel (A), of a vehicle combination (3, 4),
comprising a coupling eye (21) with a coupling eye bushing (22), the coupling eye (23) of which extends along a longitudinal axis (X'),
**characterized by**
at least one wear detection means (6), preferably centrally arranged along the longitudinal axis (X'), which is oriented perpendicular to the longitudinal axis (X') and arranged at least within the coupling eye sleeve (22) in such a way that wear of the coupling eye sleeve (22) perpendicular to the longitudinal axis (X') can be detected optically and/or by a sensor.

2. Coupling device (2) according to claim 1, **characterized in that**
the wear detection means (6) is arranged in at least one horizontal cavity (26) of the coupling eye bushing (22),
wherein the wear detection means (6)
comprises at least a first wear element (60) of a first color, which is arranged between the inner edge of the horizontal cavity (26) of the coupling eye bushing (22) and a wear limit, and
at least a second wear element (61) of a second, different color, which is arranged within the wear limit.

3. A coupling device (2) according to claim 2, **characterized in that**
the wear detection means (6) comprises at least one light-emitting element (62) which is arranged within the horizontal cavity (26) of the coupling eye bushing (22) and/or within a cavity (24) of the coupling eye (21), preferably within an annular cavity (24) of the coupling eye (21), and is configured to allow light from the first wear element (60) to pass through the second wear element (61).

4. Coupling device (2) according to claim 3, **characterized in that**
the wear detection means (6), preferably within a cavity (24) of the coupling eye (21), preferably within an annular cavity (24) of the coupling eye (21), and/or within a horizontal cavity (25) of the coupling eye (21) and/or a shaft (20), comprises at least one electrical energy storage device (66) which is configured to supply electrical power to at least the light source (62), preferably also to a detection unit (64) and/or a wireless communication unit (65).

5. A coupling device (2) according to any one of the preceding claims, **characterized in that**
the wear detection means (6) is arranged in at least one horizontal cavity (26) of the coupling eye bushing (22),
wherein the wear detection means (6) comprises
at least a first wear element (60), which is arranged between the inner edge of the horizontal cavity (26) of the coupling eye bushing (22) and a wear limit, and
at least a second wear element (61), which is arranged within the wear limit,
wherein at least one electrically conductive element (63) of an electrical circuit is arranged at the wear limit such that the electrically conductive element (63) is severed by the wear of the coupling eye bushing (22) when the wear reaches the wear limit,
wherein the wear detection means (6), preferably within a cavity (24) of the coupling eye (21), preferably within an annular cavity (24) of the coupling eye (21), and/or within a horizontal cavity (25) of the coupling eye (21) and/or a shaft (20), comprises a detection unit (64) that is configured to monitor the electrical conductivity of the electrically conductive element (63) and, preferably upon severing of the electrically conductive element (63), to output corresponding information.

6. A coupling device (2) according to claim 5, **characterized in that**
the wear detection means (6), preferably within a cavity (24) of the coupling eye (21), preferably within an annular cavity (24) of the coupling eye (21), and/or within a horizontal cavity (25) of the coupling eye (21) and/or a shaft (20), comprises at least one wireless communication unit (65), preferably a wireless transmission unit (65), which is configured to wirelessly transmit at least one piece of information from the detection unit (64) outside the coupling eye (21).

7. Coupling device (2) according to claim 6, **characterized in that**
the wireless communication unit (65) is configured to be prompted from outside the coupling eyelet (21) to wirelessly transmit information from the detection unit (64).

8. A coupling device (2) according to claim 6 or 7, **characterized in that**
the information wirelessly transmitted by the detection unit (64) contains the state of the electrically conductive element (63) and/or information derived from the state of the electrically conductive element (63).

9. A coupling device (2) according to any one of the preceding claims, **characterized in that**
the wear detection means (6), preferably at least a first wear element (60) and a second wear element (61), is arranged at least twice in the coupling eye socket (22), preferably diametrically opposite one another with respect to the longitudinal axis (X').

10. Coupling device (2) according to one of the preceding claims, **characterized in that**
the wear detection means (6), preferably at least a first wear element (60) and a second wear element (61), arranged at least twice in pairs, preferably as a pair diametrically opposite each other with respect to the longitudinal axis (X'), and most preferably offset at right angles to each other in pairs, within the coupling eye bushing (22).

11. A coupling device (2) according to any one of claims 5 through 8 and according to any one of claims 9 or 10, **characterized in that**
the detection unit (64) is configured to monitor the electrical conductivity of all electrically conductive elements (63) and, preferably upon severing of at least one of the electrically conductive elements (63), to output corresponding information.

12. A coupling device (2) according to claim 11, **characterized in that**
the information transmitted wirelessly by the detection unit (64) further includes an identification of the severed electrically conductive element (63).

13. Coupling eye bushing (22) for use in a coupling eye (21) of a coupling device (2) for a vehicle (4) at the rear in the direction of travel (A) of a vehicle combination (3, 4), whose coupling eye (23) extends along a longitudinal axis (X'),
**characterized by**
at least one wear detection means (6), preferably centered along the longitudinal axis (X'), which is oriented perpendicular to the longitudinal axis (X') and arranged at least within the coupling eye bushing (22) in such a way that wear on the coupling eye bushing (22) perpendicular to the longitudinal axis (X') can be detected visually and/or by a sensor.

14. Rear vehicle (4) with a coupling device (2) according to any one of claims 1 through 12.

15. Vehicle combination (3, 4) with a rear vehicle (4) according to claim 14.

## Revendications

1. Dispositif d'attelage (2) destiné à un véhicule (4) situé à l'arrière, dans le sens de traction (A), d'un ensemble de véhicules (3, 4),
comportant un œillet d'attelage (21) muni d'une douille d'œillet d'attelage (22), dont l'œillet d'attelage (23) s'étend le long d'un axe longitudinal (X'),
**caractérisé par**
au moins un moyen de détection d'usure (6), de préférence disposé au centre le long de l'axe longitudinal (X'), qui est orienté perpendiculairement à l'axe longitudinal (X') et disposé au moins dans la douille d'œillet d'attelage (22) de telle sorte qu'une usure de la douille d'œillet d'attelage (22) perpendiculairement à l'axe longitudinal (X') puisse être détectée visuellement et/ou par capteur.

2. Dispositif d'attelage (2) selon la revendication 1, **caractérisé en ce que**
le moyen de détection d'usure (6) est disposé dans au moins une cavité horizontale (26) de la douille d'œillet d'attelage (22),
le moyen de détection d'usure (6)
comporte au moins un premier élément d'usure (60) d'une première couleur, qui est disposé entre le bord intérieur de la cavité horizontale (26) de la douille à œillet d'attelage (22) et une limite d'usure, et
au moins un deuxième élément d'usure (61) d'une deuxième couleur différente, qui est disposé à l'intérieur de la limite d'usure.

3. Dispositif d'attelage (2) selon la revendication 2, **caractérisé en ce que**
le moyen de détection d'usure (6) comporte au moins un moyen lumineux (62) qui est disposé à l'intérieur de la cavité horizontale (26) de la douille d'œillet d'attelage (22) et/ou à l'intérieur d'une cavité (24) de l'œillet d'attelage (21), de préférence à l'intérieur d'une cavité annulaire (24) de l'œillet d'attelage (21), et est conçu pour permettre au premier élément d'usure (60) d'être éclairé à travers le second élément d'usure (61).

4. Dispositif d'attelage (2) selon la revendication 3, **caractérisé en ce que**
le moyen de détection d'usure (6), de préférence à l'intérieur d'une cavité (24) de l'œillet d'attelage (21), de préférence à l'intérieur d'une cavité annulaire (24) de l'œillet d'attelage (21), et/ou à l'intérieur d'une cavité horizontale (25) de l'œillet d'attelage (21) et/ou d'une tige (20), comporte au moins un accumulateur d'énergie électrique (66) qui est conçu pour alimenter électriquement au moins le moyen d'éclairage (62), de préférence également une unité de détection (64) et/ou une unité de communication sans fil (65).

5. Dispositif d'attelage (2) selon l'une des revendications précédentes, **caractérisé en ce que**
le moyen de détection d'usure (6) est disposé dans au moins une cavité horizontale (26) de la douille d'œillet d'attelage (22),
le moyen de détection d'usure (6)
comprend au moins un premier élément d'usure (60), qui est disposé entre le bord intérieur de la cavité horizontale (26) de la douille d'œillet d'attelage (22) et une limite d'usure, et
au moins un deuxième élément d'usure (61), qui est disposé à l'intérieur de la limite d'usure,
au moins un élément électriquement conducteur (63) d'un circuit électrique étant disposé au niveau de la limite d'usure de telle sorte que l'élément électriquement conducteur (63) soit sectionné par l'usure de la douille d'œillet d'attelage (22) lorsque l'usure atteint la limite d'usure,
le moyen de détection d'usure (6) de préférence à l'intérieur d'une cavité (24) de l'œillet d'attelage (21), de préférence à l'intérieur d'une cavité annulaire (24) de l'œillet d'attelage (21), et/ou à l'intérieur d'une cavité horizontale (25) de l'œillet d'attelage (21) et/ou d'une tige (20), comporte une unité de détection (64) qui est conçue pour surveiller la conductivité électrique de l'élément électriquement conducteur (63) et, de préférence lors de la rupture de l'élément électriquement conducteur (63), pour émettre une information correspondante.

6. Dispositif d'accouplement (2) selon la revendication 5, **caractérisé en ce que** le moyen de détection d'usure (6), de préférence à l'intérieur d'une cavité (24) de l'œillet d'attelage (21), de préférence à l'intérieur d'une cavité annulaire (24) de l'œillet d'attelage (21), et/ou à l'intérieur d'une cavité horizontale (25) de l'œillet d'attelage (21) et/ou d'une tige (20), comporte au moins une unité de communication sans fil (65), de préférence une unité d'émission sans fil (65), qui est conçue pour transmettre sans fil au moins une information provenant de l'unité de détection (64) vers l'extérieur de l'œillet d'accouplement (21).

7. Dispositif d'attelage (2) selon la revendication 6, **caractérisé en ce que**
l'unité de communication sans fil (65) est conçue pour recevoir, depuis l'extérieur de l'œillet d'attelage (21), une demande de transmission sans fil d'une information provenant de l'unité de détection (64).

8. Dispositif d'attelage (2) selon la revendication 6 ou 7, **caractérisé en ce que**
l'information transmise sans fil par l'unité de détection (64) contient l'état de l'élément électriquement conducteur (63) et/ou une information dérivée de l'état de l'élément électriquement conducteur (63).

9. Dispositif d'accouplement (2) selon l'une des revendications précédentes, **caractérisé en ce que**
le moyen de détection d'usure (6), est de préférence constitué d'au moins un premier élément d'usure (60) et d'un deuxième élément d'usure (61), disposés au moins deux fois, de préférence diamétralement opposés l'un à l'autre par rapport à l'axe longitudinal (X'), dans la douille d'œillet d'attelage (22).

10. Dispositif d'accouplement (2) selon l'une des revendications précédentes, **caractérisé en ce que**
le moyen de détection d'usure (6), de préférence au moins un premier élément d'usure (60) et un deuxième élément d'usure (61), au moins deux fois par paires, de préférence disposés en paire de manière diamétralement opposée l'un à l'autre par rapport à l'axe longitudinal (X') et, de manière particulièrement préférée, décalés perpendiculairement l'un par rapport à l'autre, sont disposés dans la douille d'œillet d'attelage (22).

11. Dispositif d'attelage (2) selon l'une des revendications 5 à 8 et selon l'une des revendications 9 ou 10, **caractérisé en ce que**
l'unité de détection (64) est conçue pour surveiller la conductivité électrique de tous les éléments électriquement conducteurs (63) et, de préférence lors de la rupture d'au moins l'un des éléments électriquement conducteurs (63), pour émettre une information correspondante.

12. Dispositif d'attelage (2) selon la revendication 11, **caractérisé en ce que**
l'information transmise sans fil par l'unité de détection (64) contient en outre une identification de l'élément électriquement conducteur (63) sectionné.

13. Douille d'œillet d'attelage (22) destinée à être utilisée dans un œillet d'attelage (21) d'un dispositif d'attelage (2) pour un véhicule (4) situé à l'arrière, dans le sens de traction (A), d'un ensemble de véhicules (3, 4), dont l'œillet d'attelage (23) s'étend le long d'un axe longitudinal (X'),
**caractérisée par**
au moins un moyen de détection d'usure (6), de préférence disposé au centre le long de l'axe longitudinal (X'), qui est orienté perpendiculairement à l'axe longitudinal (X') et disposé au moins dans la douille (22) de l'œillet d'attelage de telle sorte qu'une usure de la douille (22) de l'œillet d'attelage puisse être détectée visuellement et/ou par capteur perpendiculairement à l'axe longitudinal (X'). .

14. Véhicule arrière (4) comportant un dispositif d'attelage (2) selon l'une des revendications 1 à 12.

15. Ensemble de véhicules (3, 4) comportant un véhicule arrière (4) selon la revendication 14. Anspruch 14.
